# EUROPÄISCHE PATENTSCHRIFT

(11) **EP 1 217 898 B1**
(45) Veröffentlichungstag und Bekanntmachung des Hinweises auf die Patenterteilung: **02.04.2003**
(21) Anmeldenummer: 00962462.8
(22) Anmeldetag: 09.09.2000
(51) Int. Cl.: A23G 3/00, A23L 1/236

(54) **HARTKARAMELLEN MIT VERBESSERTER LAGERSTABILITÄT**
HARD CANDY WITH IMPROVED STORAGE STABILITY
CARAMELS DURS A STABILITE D'ENTREPOSAGE AMELIOREE

(30) Priorität: 22.09.1999 DE 19945481
(43) Veröffentlichungstag der Anmeldung: 03.07.2002
(73) Patentinhaber: SÜDZUCKER AKTIENGESELLSCHAFT MANNHEIM/OCHSENFURT, 68165 Mannheim (DE)
(72) Erfinder: BERNARD, Jörg, 67283 Obrigheim (DE); DEGELMANN, Hanspeter, 67549 Worms (DE); JANSSEN, Holger, 67591 Hohen-Sülzen (DE); KOWALCZYK, Jörg, 67248 Bockenheim (DE); KUNZ, Markwart, 67550 Worms (DE)
(74) Vertreter: Schrell, Andreas, Dr.
(86) Internationale Anmeldenummer: EP0008815
(87) Internationale Veröffentlichungsnummer: WO01021005

(56) Entgegenhaltungen:
- EP-A- 0 438 912
- EP-A- 0 625 578
- WO-A-97/08958
- WO-A-97/30598
- WO-A-98/39978
- US-A- 4 117 173
- US-A- 4 323 588

## Beschreibung

Die vorliegende Erfindung betrifft Hartkaramellen mit einem Gehalt an 1-O-α-D-Glucopyranosyl-D-mannit (im folgenden 1,1-GPM genannt) sowie Verfahren zu deren Herstellung.

Die EP-A2 0 303 295 beschreibt eine Hartkaramelle, die Meso-Erythrit als Hauptkomponente sowie weitere Saccharide, wie Saccharose, Glucose, Malzsirup, Fructose, Isomaltulose und Isomaltose enthält. Die US 4,587,119 beschreibt die Verwendung von Isomaltulose als Saccharose-Ersatz in bestimmten Nahrungsmitteln und pharmazeutischen Produkten. Die US 4,971,798 offenbart Hartkaramellen, die hydrierte Isomaltulose enthalten. Hydrierte Isomaltulose ist ein nahezu äquimolares Gemisch aus 6-O-α-D-Glucopyranosyl-D-sorbit (im folgenden 1,6-GPS genannt) und dem stereoisomeren 1,1-GPM. Dieses Gemisch wird auch als Palatinit und im folgenden als Isomalt bezeichnet. Isomalt wird hergestellt, indem Saccharose enzymatisch isomerisiert, die entstandene Isomaltulose von den weiteren Bestandteilen, wie zum Beispiel Trehalulose und Isomaltose, abgetrennt und die Isomaltulose zu 1,6-GPS und 1,1-GPM hydriert wird, wobei 1,1-GPM als Dihydrat auskristallisiert. In der EP 0 625 578 B1 werden Karamellen erwähnt, die ein Süßungsmittelgemisch aus 1,1-GPS (1-O-α-D-Glucopyranosyl-Dsorbit), 1,1-GPM und 1,6-GPS enthalten. Es wird erläutert, daß eine Erhöhung des 1,1-GPS-Gehaltes die Kristallisationsneigung des 1,1-GPM unterdrückt. Hartkaramellen werden in dieser Druckschrift nicht offenbart. Die DE 195 32 396 C2 offenbart Hartkaramellen, die ein 1,6-GPS oder 1,1-GPM-angereichertes Gemisch enthalten. Unter einem 1,1-GPM-angereicherten Gemisch wird ein Gemisch aus 1,6-GPS und 1,1-GPM verstanden, welches ein Verhältnis von 1 Gew.-% : 99 Gew.-% bis 43 Gew.-% : 57 Gew.-% 1,6-GPS zu 1,1-GPM aufweist, das heißt 57 bis 99 Gew.-% 1,1-GPM enthält. Die in dieser Druckschrift konkret offenbarten Hartkaramellen weisen einen 1,1-GPM-Gehalt von 85 Gew.-% auf. Die beschriebenen Hartkaramellen zeichnen sich jedoch dadurch aus, daß sie, insbesondere bei längerer, Lagerung zur Rekristallisation neigen, wobei sich kristallisierte Bereiche auf der Oberfläche der Hartkaramellen bilden beziehungsweise Trübungen in derselben auftreten. Beide Erscheinungen sind unerwünscht, da sie sowohl die Verkaufsfähigkeit als auch die Sensorik beeinflussen können.

Das der vorliegenden Erfindung zugrundeliegende technische Problem besteht daher darin, Hartkaramellen bereitzustellen, die eine verbesserte Lagerstabilität aufweisen.

Die Lösung dieses technischen Problems wird durch die Bereitstellung einer Hartkaramelle erreicht, die einen 1,1-GPM-Gehalt von 52 bis 60 Gew.-% (Gew.-%-Angaben immer bezogen auf Gesamttrockensubstanz der Hartkaramelle, falls nicht anders angegeben) und einen Sorbit-Gehalt von 0,5 bis 3,5 Gew.-% aufweist. In einer bevorzugten Ausführungsform weist die Hartkaramelle einen 1,1-GPM-Gehalt von 54 bis 58 Gew.-%, vorzugsweise von 55 bis 57 Gew.-% auf.

In einer weiteren bevorzugten Ausführungsform weist die vorgenannte Hartkaramelle einen Sorbit-Gehalt von 1 bis 1,5 Gew.-% auf.

Die Erfindung betrifft in einer weiteren bevorzugten Ausführung jedoch auch Hartkaramellen mit einem 1,1-GPM-Gehalt von 52 bis 60 Gew.-%, insbesondere 54 bis 58 Gew.-%, und einem Sorbit-Gehalt von 1,8 bis 3,5 Gew.-%.

Die Erfindung betrifft in einer bevorzugten Ausführungsform eine vorgenannte Hartkaramelle, wobei diese 54 bis 56 Gew.-% 1,1-GPM und 1,8 bis 3,5 Gew.-% Sorbit, insbesondere 55 Gew.-% 1,1-GPM und 3 Gew.-% Sorbit aufweist.

In einer weiteren bevorzugten Ausführungsform weist die erfindungsgemäße Hartkaramelle einen 1,1-GPM-Gehalt von 56 bis 60 Gew.-% und einen Sorbit-Gehalt von 0,8 bis 1,8 Gew.-% auf.

Die erfindungsgemäßen Hartkaramellen zeichnen sich überraschenderweise durch eine besonders geringe Wasseraufnahme auf und zeigen eine wesentlich geringere Neigung zur Rekristallisation als bekannte Hartkaramellen. Ihre Lagerfähigkeit ist dadurch erheblich verbessert. Die Bildung von kristallinen Bereichen auf der Oberfläche der Hartkaramellen sowie von trüben Zonen innerhalb der Hartkaramellen wird erfindungsgemäß weitgehend oder ganz vermieden beziehungsweise tritt erst erheblich später auf.

Überdies zeichnet sich die Verwendung eines gegenüber einem 1:1 Verhältnis von 1,1-GPM zu 1,6-GPS erhöhten 1,1-GPM-Gehaltes in einer farbbildende Substanzen aufweisenden Hartkaramelle dadurch aus, daß die Hartkaramellen eine erhöhte Farbstabilität beziehungsweise reduzierte Farbbildung aufweisen.

Im Zusammenhang mit der vorliegenden Erfindung wird unter einer Hartkaramelle ein amorphes Produkt verstanden, welches herstellbar ist, indem man einer wäßrigen Lösung oder Suspension eines Süßungsmittels, wie zum Beispiel einem Zuckeraustauschstoff, durch Verdampfung Wasser entzieht, so daß die Lösung oder Suspension des Zuckeraustauschstoffes aufkonzentriert wird und dieses Konzentrat in eine beliebige Form bringt, zum Beispiel gießt oder prägt. Hartkaramellen können auch durch Schmelzextrusion eines trockenen Süßungsmittelgemisches hergestellt werden. Selbstverständlich können der Hartkaramelle bei ihrer Herstellung weitere Bestandteile wie Aromen, Farbstoffe, Intensiv-Süßstoffe oder ähnliches zugefügt werden.

Die Erfindung sieht also vor, daß die erfindungsgemäße Hartkaramelle 1,1-GPM in einer Menge von 52 bis 60 Gew.-% sowie Sorbit in einer Menge von 0,5 bis 3,5 Gew.-% enthält. Die Hartkaramelle kann weitere Hilfs- oder Zusatzstoffe enthalten, wie weitere Süßungsmittel, Intensiv-Süßstoffe, Farbstoffe, Geschmacksstoffe, Aromen, lebensmittelverträgliche Säuren, Konservierungsmittel, Wirkstoffe, Füllstoffe, Fettersatzstoffe, Mineralsalze, enthaltend zum Beispiel Ca²⁺ oder Mg²⁺, oder Bindemittel. So kann die erfindungsgemäße Karamelle Zuckeralkohole, insbesondere Maltit, hydrierte Stärke-Hydrolysate (HSH), Erythrit, Xylit, Lactit und/oder Mannit enthalten. Mannit kann in bevorzugter Weise in einer Menge von 0,4 bis 4 Gew.-% verwendet werden. Erfindungsgemäß kann als Wirkstoff insbesondere ein medizinisch aktiver Stoff zugesetzt werden, der prophylaktische oder therapeutische Wirkung auf den menschlichen oder tierischen Körper entfaltet, zum Beispiel Antihistamine, Antibiotica, Fungizide, Microbizide, Hexylresorcin, Dextromethorphan-Hydrobromid, Menthol, Nicotin, Coffein, Vitamine, Zink, Eukalyptus, Benzocain, Cetylpyridinium, Fluoride, Phenylpropanolamin oder andere pharmazeutisch wirksame Substanzen.

Die erfindungsgemäßen Hartkaramellen können Aromastoffe, wie Pflanzen- und Fruchtöle, Zitrusöle, Blüten- oder Blattöle, Öle aus Kirsche, Menthol, Eukalyptus, Pfefferminz, Honig oder grüner Minze, Fruchtessenzen, Grüner-Tee-Extrakt oder natürliche oder synthetische Färbemittel etc. enthalten. Die genannten Aromastoffe werden vorzugsweise in einer Menge von 0,05 bis 3 Gew.-% zugegeben. Die Hartkaramellen können in bevorzugter Ausgestaltung der Erfindung auch Bindemittel, wie Alginate, Cellulose, Gelatine oder pflanzliche Gummen enthalten.

Es kann auch vorgesehen sein, den erfindungsgemäßen Hartkaramellen Intensivsüßstoffe zur Erhöhung der Süßkraft zuzufügen, wie Aspartam, Cyclamat, Acesulfam-K, Saccharin, Sucralose, Alitame, Neohesperidin DC, Stevioside, Thaumatin oder ähnliche.

Als Farbstoffe kommen erfindungsgemäß synthetische oder natürliche Farbstoffe in Betracht. Als synthetischer Farbstoff kann beispielsweise Erythrosin, Indigo Carmine, Tartrazin, Titandioxid oder ähnlichen verwendet werden. Natürliche Farbstoffe können Carotinoide, zum Beispiel Betacarotine, Riboflavine, Chlorophyll, Anthocyane, zum Beispiel aus der Roten Bete, Betanin oder ähnliche sein. Im Fall der Verwendung von synthetischen Farbstoffen werden typischerweise 0,01 bis 0,03 Gew.-% an Farbstoff eingesetzt, während im Fall natürlicher Farbstoffe bevorzugt 0,1 bis 1 Gew.-% verwendet werden.

Als Füllstoffe können beispielsweise Polydextrose oder Inulin dienen. Als Fettersatzstoffe kommen beispielsweise Caprenin, Salatrim oder Olestra in Betracht.

Als lebensmittelverträgliche organische Säuren können beispielsweise Zitronensäure, Äpfelsäure, Milchsäure, Weinsäure, Ascorbinsäure oder ähnlich wirkende lebensmittelverträgliche Säuren eingesetzt werden.

Die erfindungsgemäßen Hartkaramellen können auch Emulgatoren oder ähnliches enthalten.

Selbstverständlich kann die erfindungsgemäße Hartkaramelle auch weitere Zuckeralkohole, wie 1,6-GPS und 1,1-GPS enthalten. In bevorzugter Ausgestaltung weist die erfindungsgemäße Hartkaramelle neben den genannten Mengen an 1,1-GPM und Sorbit mindestens ein weiteres Süßungsmittel auf, zum Beispiel 1,6-GPS, insbesondere 36,5 bis 47,5 Gew.-% 1,6-GPS, wobei bevorzugt vorgesehen sein kann, anstelle vorzugsweise eines kleinen Anteils von 1,6-GPS, zum Beispiel eines Anteils von 1 bis 8 Gew.-%, 1,1-GPS, Aromastoffe, Mannit, lebensmittelverträgliche Säuren und/oder Aromastofe in die Hartkaramelle einzuarbeiten. Die erfindungsgemäße Karamelle kann vorzugsweise zuckerfrei, also diabetiker-geeignet und zahnfreundlich sein. Es kann aber auch vorgesehen sein, daß in der Karamelle Zucker, wie Saccharose, Glucose, Fructose oder ähnliches vorhanden sind.

Die Erfindung betrifft auch ein Verfahren zur Herstellung der erfindungsgemäßen Hartkaramellen, wobei eine wässrige Lösung oder Suspension, enthaltend ein Edukt-Gemisch aus den vorgenannten Mengen an 1,1-GPM und Sorbit, zum Beispiel 52 bis 60 Gew.-% 1,1-GPM und 0,5 bis 3,5 Gew.-% Sorbit, erhitzt, evaporiert und auf einen Trockensubstanzgehalt von mindestens 95 Gew.-%, 96, 97, 98 oder 99,3 Gew.-%, konzentriert wird. Anschließend wird abgekühlt und geformt. Die Aufkonzentrierung erfolgt vorteilhafterweise durch Evaporation von Wasser durch Kochen und/oder Anlegen von Vacuum, beispielsweise satzweise oder kontinuierlich. Die Herstellung der Hartkaramellen kann aber auch mittels Schmelzextrusion durchgeführt werden.

Die Hartkaramellen der vorliegenden Erfindung können in geprägter oder gegossener Form vorliegen und gegebenenfalls Füllungen, beispielsweise MaltitSirup, enthalten.

Die Erfindung betrifft daher beispielsweise Hartkaramellen, die ein Süßungsmittelgemisch oder bulking agent in einer Menge von 10 bis 99 Gew.-%, vorzugsweise 90 bis 99 Gew.-%, einen Geschmacksstoff in einer Menge von 0,01 bis 2,5 Gew.-%, einen Intensivsüßstoff in einer Menge von 0,05 bis 0,25 Gew.-%, eine organische Säure in einer Menge von 0,1 bis 5,0 Gew.-% (jeweils bezogen auf das Gesamtgewicht der Karamelle) Wasser und gegebenenfalls bei Verwendung als medizinisch aktiver Hartkaramelle, einen medizinischen Wirkstoff in einer Menge von zum Beispiel 1,0 bis 15 mg pro Einheit enthalten. Dabei ist vorzugsweise vorgesehen, daß das vorgenannte Süßungsmittelgemisch einen 1,1-GPM-Gehalt aufweist, der einem 1,1-GPM-Gehalt bezogen auf die Gesamttrockensubstanzmenge der Hartkaramelle von 52 bis 60 Gew.-% entspricht. Weitere in dem Süßungsmittelgemisch vorhandene Substanzen können, wie bereits ausgeführt, 1,6-GPS, 1,1-GPS, Mannit, Sorbit, hydrierte oder nicht-hydrierte Oligomere oder andere Süß- oder Füllstoffe sein. Die erfindungsgemäßen Hartkaramellen sowie Hartkaramellen mit einem 1,1-GPM-Gehalt von mehr als 52 Gew.-%, insbesondere 52 Gew.-% bis 80 Gew.-%, zeichnen sich durch eine reduzierte Farbbildung aus. Die Erfindung betrifft daher auch die Verwendung der vorgenannten 1,1-GPMund/oder Sorbit-Mengen, insbesondere von einem Trockensubstanzanteil von mehr als 52 Gew.-% 1,1-GPM, insbesondere 52 bis 80 Gew.-%, vorzugsweise 52 bis 60 Gew.-% 1,1-GPM in einer Hartkaramelle zur Reduktion der Farbbildung und Erhöhung der Farbstabilität.

Weitere vorteilhafte Ausgestaltungen können den Unteransprüchen entnommen werden.

Die Erfindung wird anhand der folgenden Beispiele und der dazugehörigen Figuren näher erläutert.

Die Figuren zeigen:
- Figur 1: die relative Wasseraufnahme von Glaskörpern und Hartkaramellen mit unterschiedlichem Sorbit-Gehalt in Abhängigkeit von deren 1,1-GPM-Gehalt,
- Figur 2: die relative Wasseraufnahme von Glaskörpern mit unterschiedlichem 1,1-GPM-Gehalt in Abhängigkeit von deren Sorbit-Gehalt und
- Figur 3: die Reduktion der Farbbildung in 1,1-GPM angereicherten wäßrigen Lösungen zur Herstellung von Hartkaramellen.

### Beispiel 1: Herstellung von Glaskörpern

Die Zusammensetzung der eingesetzten Glaskörper ergibt sich aus nachfolgender Tabelle 1.

**Tabelle 1:**

| Zusammensetzung der Glaskörper (GPS: in den Tabellen 1 bis 3 und im Text bezeichnet GPS die Summe aus 1,6-GPS und 1,1-GPS, wenn nicht anders angegeben) | | | | | |
|---|---|---|---|---|---|
| Probe | 1,1-GPM-Gehalt/auf TS | Sorbit-Gehalt/% auf TS | Anfangswasser-Gehalt/% | GPS % auf TS | Mannit % auf TS |
| 1 | 55,0 | 0,1 | 1,4 | 43,9 | 0,1 |
| 2 | 54,7 | 1,1 | 1,3 | 42,7 | 0,7 |
| 3 | 55,1 | 3,0 | 0,9 | 41,0 | 0,0 |
| 4 | 57,1 | 0,1 | 1,4 | 41,8 | 0,0 |
| 5 | 56,6 | 1,0 | 1,7 | 40,6 | 0,6 |
| 6 | 57,1 | 2,9 | 1,3 | 38,7 | 0,1 |

Die Glaskörper wurden wie folgt hergestellt. Das Süßungsmittelgemisch aus 1,1-GPM, Sorbit, GPS und Mannit wird mit Wasser im Satzkocher auf 155-160°C erhitzt und etwa 1 bis 1,5 Minuten vollem Vacuum ausgesetzt. Die Masse wird auf einem Kühltisch unter ständigem Falten abgekühlt. Die abgekühlte, plastisch verformbare Masse wird zu Bonbons geprägt und weiter auf Raumtemperatur abgekühlt. Die vorgenannte Rezeptur kann auch auf einer kontinuierlichen Kochanlage (zum Beispiel Bosch, Klöckner-Hänsel) oder ohne Wasserzusatz in einer Schmelzextrusion zu Bonbons verarbeitet werden. Erfindungsgemäß können sowohl geprägte als auch gegossene Hartkaramellen hergestellt werden.

### Beispiel 2: Lagerstabilität der Glaskörper

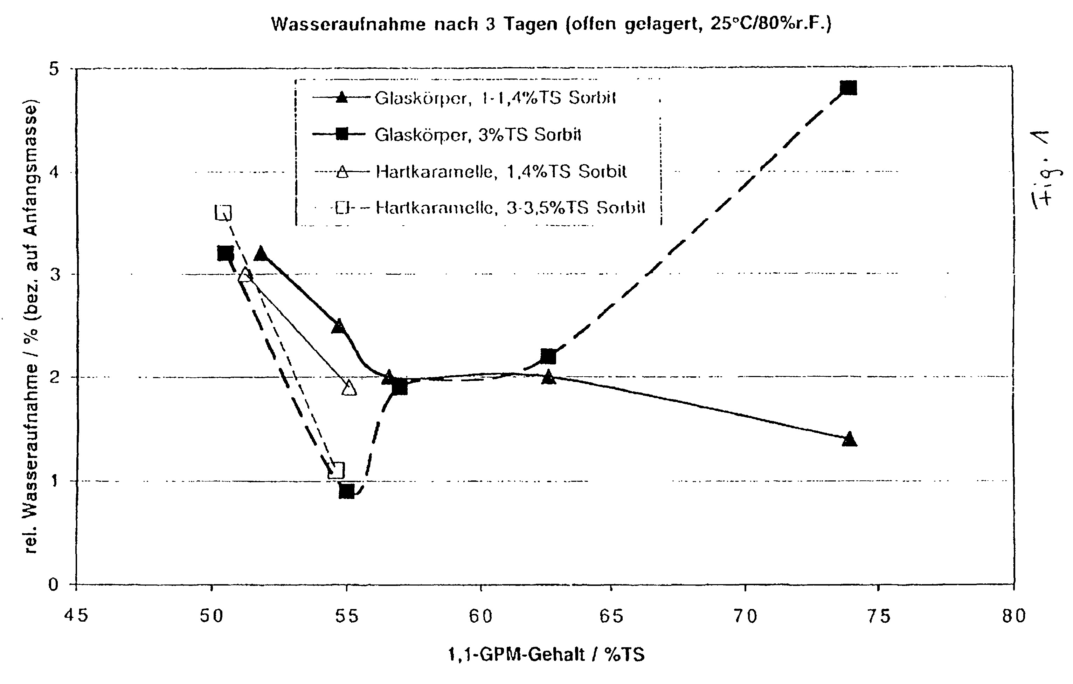

Die Glaskörper des Beispiels 1 wurden offen bei 25°C und einer relativen Luftfeuchtigkeit von 80 % gelagert. Die Wasseraufnahme der Glaskörper wurde täglich ermittelt, das Aussehen der Glaskörper beurteilt und diese fotografiert. Dadurch konnten Rekristallisationstendenzen eindeutig nachgewiesen werden. Figur 1 zeigt die Wasseraufnahme der Glaskörper nach drei Tagen, wobei die Glaskörper 1 bis 1,4 beziehungsweise 3 Gew.-% Sorbit enthalten, in Abhängigkeit von dem 1,1-GPM-Gehalt. Glaskörper mit etwa 1 bis 1,4 Gew.-% Sorbit zeigen bei einem 1,1-GPM-Gehalt von etwa 56 bis 60 Gew.-% eine unerwartet deutliche Verringerung der Wasseraufnahme und der Rekristallisation. Insbesondere bei einem 1,1-GPM-Gehalt von etwa 57 Gew.-% zeigt sich eine besonders deutlich ausgeprägte Verringerung der Wasseraufnahme und Rekristallisation. Hartkaramellen mit einem Sorbit-Gehalt von etwa 3 Gew.-% zeigen in einem Bereich von 54 bis 56 Gew.-%, insbesondere bei 55 Gew.-%, 1,1-GPM ein deutlich ausgeprägtes Minimum der Wasseraufnahme und Rekristallisation.

### Beispiel 3: Herstellung von Hartkaramellen

Es wurden Hartkaramellen gemäß der Rezeptur der nachfolgenden Tabelle 2 hergestellt.

**Tabelle 2:**

| Zusammensetzung der Hartkaramellen | | | | | |
|---|---|---|---|---|---|
| Probe | 1,1-GPM-Gehalt/% auf TS | Sorbit-Gehalt/% auf TS | Anfangswasser-Gehalt/% | Mannit-Gehalt/% auf TS | GPS-Gehalt/% auf TS |
| 1 | 51,2 | 1,4 | 1,0 | 0,6 | 45,2 |
| 2 | 55,1 | 1,4 | 1,0 | 0,6 | 41,5 |
| 3 | 50,4 | 3,5 | 0,8 | 1,7 | 41,6 |
| 4 | 54,6 | 3,0 | 1,0 | 1,5 | 38,9 |

Das Süßungsmittelgemisch, bestehend aus 1,1-GPM, Sorbit, GPS und Mannit, dem ein Gemisch von bis zu 4 % (auf Trockenmasse), bestehend aus natürlichem Fruchtkonzentrat, Intensivsüßstoffen, Aromen und Farbstoffen zugemischt wird, wird mit Wasser auf einer kontinuierlichen Kochanlage auf 155-160°C gekocht. Zum Verdampfen des Wassers wird die Masse bis zu fünf Minuten vollem Vacuum ausgesetzt. Die durch das Evakuieren auf 124 bis 146°C abgekühlte Masse wird auf einem Kühlband gefaltet, zu einer plastisch verformbaren Masse kontrolliert weiter abgekühlt und in einer Prägestraße geprägt. Anschließend werden die Hartkaramellen in einem Kühltunnel weiter abgekühlt. Die vorgenannte Rezeptur kann auch satzweise oder ohne Wasserzusatz in einer Schmelzextrusion zu Bonbons verarbeitet werden. Erfindungsgemäß können sowohl geprägte als auch gegossene Hartkaramellen hergestellt werden.

### Beispiel 4: Lagerstabilität der Hartkaramellen

Die in Beispiel 3 hergestellten Hartkaramellen wurden offen in Petrischalen bei 25 °C und 80 % relativer Luftfeuchtigkeit gelagert, täglich gewogen, beurteilt und fotografiert.

In Figur 1 ist die Wasseraufnahme der Hartkaramellen nach drei Tagen gezeigt, wobei die Hartkaramellen, 1,4 Gew.-% oder 3 bis 3,5 Gew.-% Sorbit bei unterschiedlichem 1,1-GPM-Gehalt aufweisen. Der Figur 1 kann entnommen werden, daß nicht nur bei den Glaskörpern, sondern auch bei Hartkaramellen eine Erhöhung des 1,1-GPM-Gehaltes von etwa 50 bis 51 Gew.-% auf Werte von 52 bis 60 Gew.-%, insbesondere 54 bis 55 Gew.-%, eine deutliche Reduzierung der Wasseraufnahme mit sich bringt. Die Verringerung der Wasseraufnahme bei den Hartkaramellen ist in ihrem Verlauf und in ihrem Ausmaß mit den korrespondierenden Glaskörpern vergleichbar.

Die visuelle Untersuchung der vier gemäß der Tabelle 2 hergestellten Hartkaramellen nach zwei und drei Tagen zeigt folgendes: Erkennbar ist, daß eine Korrelation zwischen verringerter Wasseraufnahme, Reduzierung der Rekristallisation und Verbesserung der Lagerstabilität vorliegt. Hartkaramellen, die 50 bis 51 Gew.-% 1,1-GPM und 1,4 bis 3,5 Gew.-% Sorbit enthalten, sind bereits nach zwei Tagen unter den genannten Bedingungen an der Oberfläche vollständig rekristallisiert. Hartkaramellen, die 54 bis 55 Gew.-% 1,1-GPM und 3 Gew.-% Sorbit enthalten, sind nicht sichtbar rekristallisiert. Hartkaramellen, die 54 bis 55 Gew.-% 1,1-GPM und 1,4 Gew.-% Sorbit enthalten, sind ebenfalls nicht vollständig rekristallisiert, weisen jedoch kleinere rekristallisierte Bereiche auf der Oberfläche auf.

Auch im Fall der Glaskörper ist die Korrespondenz der Wasseraufnahme mit der Erscheinung des Rekristallisierens der amorphen Probekörper zu erkennen. Nach einem Tag Lagerdauer zeigen die Glaskörper, die 3 Gew.-% und etwa 55 oder 57 Gew.-% 1,1-GPM enthalten, keinerlei Anzeichen von Rekristallisation. Hartkaramellen, die bei diesem Sorbit-Gehalt 50 bis 51 Gew.-% 1,1-GPM enthalten, rekristallisieren bereits nach einem Tag deutlich. Nach drei Tagen zeigen auch die Glaskörper, die 57 Gew.-% 1,1-GPM enthalten, eine allerdings nur leicht, rekristallisierte Oberfläche. Die Glaskörper, die 55 Gew.-% 1,1-GPM enthalten, sind nach drei Tagen noch glasartig. Auch im Fall der Glaskörper, die 1 bis 1,4 Gew.-% Sorbit enthalten, zeigt sich eine Verringerung der Rekristallisation, wie sie der tatsächlichen Wasseraufnahme nach zu erwarten ist. Die Probe, die 55 Gew.-% 1,1-GPM enthält, ist etwas rekristallisiert, während die, die 57 Gew.-% 1,1-GPM enthält, noch glasartig erscheint.

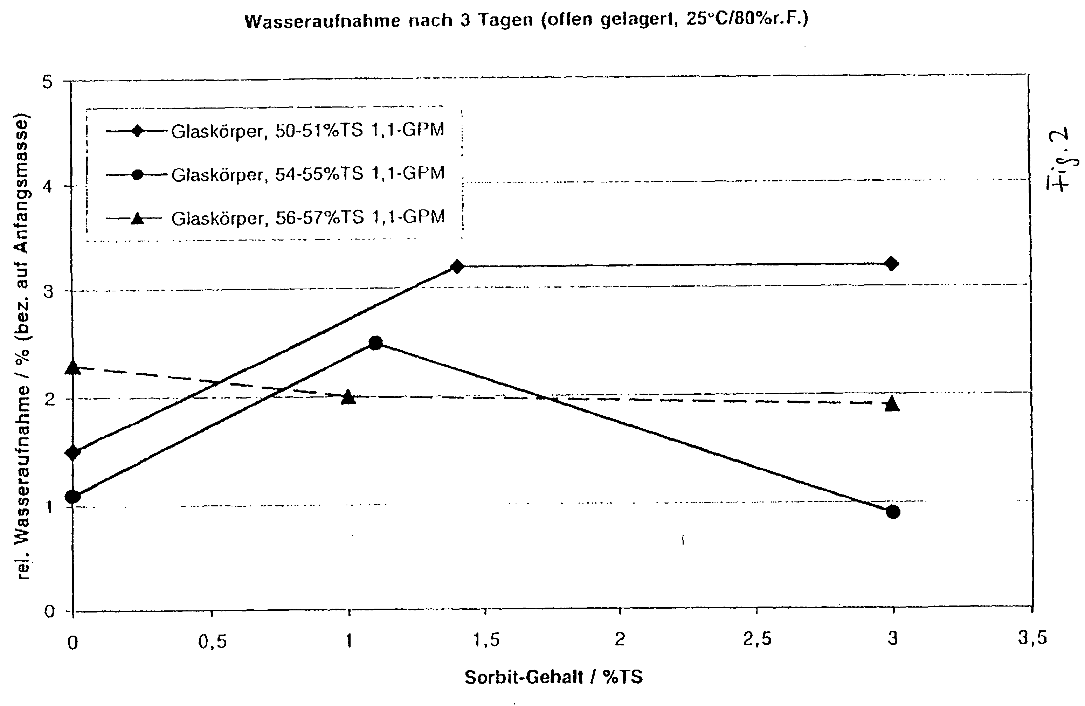

Der Figur 2 kann entnommen werden, daß Glaskörper mit einem 1,1-GPM-Gehalt von 50 bis 51 Gew.-% eine deutlich höhere Wasseraufnahme zeigen als die erfindungsgemäßen Glaskörper, unabhängig von dem Sorbit-Gehalt. Der Figur 2 kann auch entnommen werden, daß Glaskörper mit einem 1,1-GPM-Gehalt von 54 bis 55 Gew.-% ab einem Sorbit-Gehalt von etwa 1 bis 1,2 Gew.-% eine kontinuierliche Verbesserung der relativen Wasseraufnahme mit steigendem Sorbit-Gehalt aufweisen. Die Wasseraufnahme von Glaskörpern, die 55 Gew.-% 1,1-GPM und 3 Gew.-% Sorbit enthalten, liegt in etwa bei der Wasseraufnahme, die bei Sorbit-freien Isomalt-Glaskörpern beobachtet wird.

Liegt der Sorbit-Gehalt im Bereich zwischen 0,8 und 1,8 Gew.%, so ist die Wasseraufnahme von Glaskörpern bei einem 1,1-GPM-Gehalt von etwa 56 bis 60 Gew.-% besonders minimiert. Liegt der Sorbit-Gehalt im Bereich zwischen 1,8 und 3,5 Gew.-%, so ist die Wasseraufnahme bei einem 1,1-GPM-Gehalt von etwa 54 bis 58, insbesondere 54 bis 56 Gew.-% besonders minimiert. Hartkaramellen, die 3 Gew.-% Sorbit und etwa 55 Gew.-% 1,1-GPM enthalten, zeigen eine wesentlich geringere Neigung zur Rekristallisation als Hartkaramellen, die bei gleichem 1,1-GPM-Gehalt nur 1 bis 1,5 Gew.-% Sorbit enthalten. Hartkaramellen, die einen 1,1-GPM-Gehalt oberhalb 60 Gew.-% aufweisen, zeichnen sich beim Abkühlen der Schmelze durch eine Kristallierungstendenz aus. Bei der Herstellung von Hartkaramellen durch Verfestigen einer Schmelze zu einem amorphen Körper ist die Kristallisationsneigung unerwünscht.

### Beispiel 5: Reduktion der Farbbildung

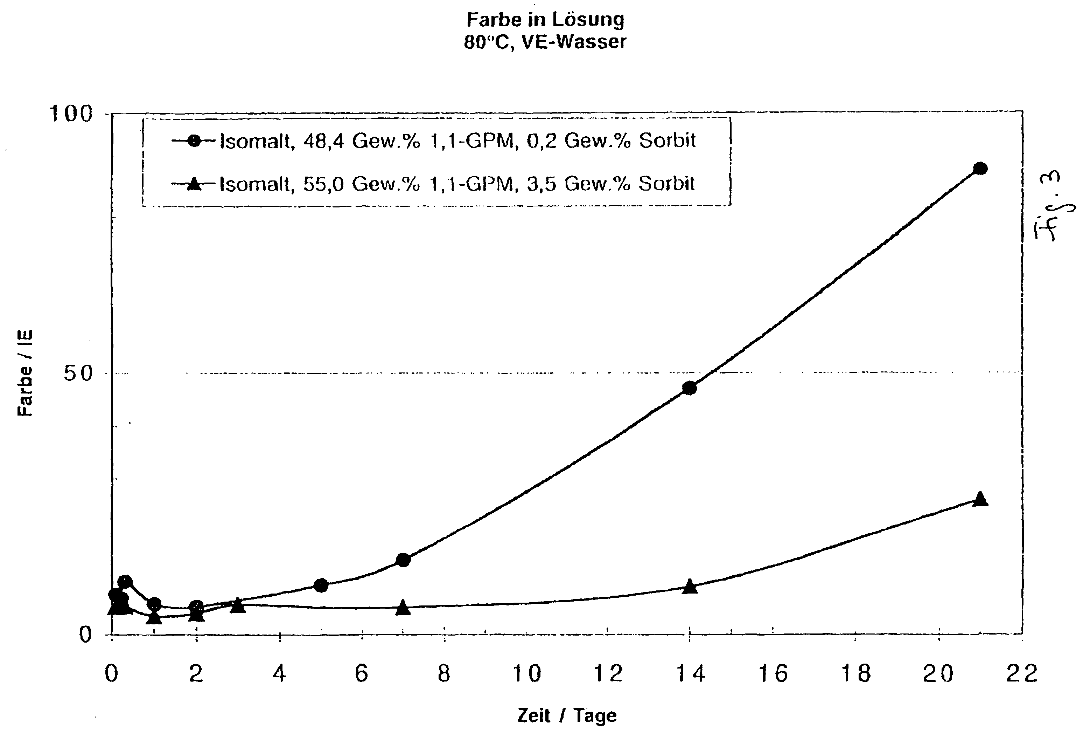

Zusätzlich zu den erwähnten Vorteilen kommt hinzu, daß in Mischungen aus 1,1-GPM, Sorbit und GPS, die zur Herstellung von Hartkaramellen eingesetzt werden, die Farbbildung reduziert wird, wenn der GPM-Gehalt gegenüber einer 1:1-Mischung aus GPM und GPS erhöht wird. Dies ist in Figur 3 am Beispiel einer Lösung, enthaltend 55,0 Gew.-% (auf TS) und 3,5 Gew.-% Sorbit, dargestellt.

Die Messung der Farbbildung wurde folgendermaßen durchgeführt: Die Farbbildung einer wäßrigen Lösung aus 75 Gew.-% Isomalt und 75 Gew.-% Isomalt mit erhöhtem 1,1-GPM-Gehalt in vollentsalztem Wasser wurde bei 80°C über einen Zeitraum von 21 Tagen verfolgt. Die Farbe der filtrierten Lösung wurde bei 420 nm in ICUMSA-Einheiten gemessen.

Der Vorteil von GPM-angereichertem Isomalt oder von Isomalt mit mehr als 52 % GPM liegt darin, daß unerwünschte Verfärbungen der hergestellten Bonbons minimiert werden, dies ist insbesondere dann vorteilhaft, wenn ein hoher Sorbit-Gehalt, zum Beispiel von 3,5 Gew.-% vorliegt. Dies ist auch dann vorteilhaft, wenn eine unerwünschte Gelbfärbung den gewünschten Farbeindruck, zum Beispiel bei blauen oder farblosen Bonbons, sichtbar beeinflußt.

Zusammensetzung der Lösungen für die Farbmessung:

**Tabelle 3:**

| Zusammensetzung der Lösungen | | |
|---|---|---|
| | Isomalt | Isomalt mit erhöhtem 1,1-GPM-Gehalt |
| 1,1-GPM/% auf TS | 48,4 | 55,0 |
| GPS / % auf TS | 46,3 | 39,0 |
| Sorbit / % auf TS | 0,2 | 3,5 |
| Mannit / % auf TS | 0,1 | 1,8 |

## Patentansprüche

1. Hartkaramelle, enthaltend 1,1-GPM (1-O-α-D-Glucopyranosyl-D-mannit) in einer Menge von 52 bis 60 Gew.-% (bezogen auf Gesamttrockensubstanz der Hartkaramelle) und Sorbit in einer Menge von 0,5 bis 3,5 Gew.-%.

2. Hartkaramelle nach Anspruch 1, wobei der 1,1-GPM-Gehalt 54 bis 58 Gew.-% beträgt.

3. Hartkaramelle nach Anspruch 2, wobei der 1,1-GPM-Gehalt 55 bis 57 Gew.-% beträgt.

4. Hartkaramelle nach einem der vorhergehenden Ansprüche, wobei der Sorbit-Gehalt 1 bis 1,5 Gew.-% beträgt.

5. Hartkaramelle nach einem der Ansprüche 1 bis 3, wobei der Sorbit-Gehalt 1,8 bis 3,5 Gew.-% beträgt.

6. Hartkaramelle nach einem der Ansprüche 1 und 2, wobei der 1,1-GPM-Gehalt 54 bis 56 Gew.-% und der Sorbit-Gehalt 1,8 bis 3,5 Gew.-% beträgt.

7. Hartkaramelle nach Anspruch 6, wobei der 1,1-GPM-Gehalt 55 Gew.-% und der Sorbit-Gehalt 3 Gew.-% beträgt.

8. Hartkaramelle nach Anspruch 1, wobei der 1,1-GPM-Gehalt 56 bis 60 Gew.-% und der Sorbit-Gehalt 0,8 bis 1,8 Gew.-% beträgt.

9. Hartkaramelle nach einem der vorhergehenden Ansprüche, wobei die Hartkaramelle Süßungsmittel, Füllstoffe, Aromastoffe, Farbstoffe, Geschmacksstoffe, medizinisch wirksame Bestandteile, lebensmittelverträgliche Säuren, Fettersatzstoffe, Mineralsalze und/oder Intensiv-Süßstoffe enthält.

10. Hartkaramelle nach einem der vorhergehenden Ansprüche, wobei die Hartkaramelle mindestens ein weiteres Süßungsmittels, insbesondere 36,5 bis 47,5 Gew.-% enthält, ausgewählt aus der Gruppe bestehend aus 1,6-GPS (6-O-α-D-Glucopyranosyl-D-sorbit), 1,1-GPS (1-0-α-D-Glucopyranosyl-D-Sorbit), Mannit und hydrierte oder nicht-hydrierte Oligosaccharide.

11. Verfahren zur Herstellung einer Hartkaramelle nach einem der vorhergehenden Ansprüche, wobei eine wässrige Lösung oder Suspension eines Gemisches, enthaltend 1,1-GPM und Sorbit, insbesondere enthaltend 52 bis 60 Gew.-% 1,1-GPM und 0,5 bis 3,5 Gew.-% Sorbit, unter Hitzeeinwirkung evaporiert, abgekühlt, geformt und eine Hartkaramelle erhalten wird.

12. Verfahren zur Herstellung einer Hartkaramelle nach einem der Ansprüche 1 bis 10, wobei ein Gemisch enthaltend 1,1-GPM und Sorbit, insbesondere enthaltend 52 bis 60 Gew.-% 1,1-GPM und 0,5 bis 3,5 Gew.-% Sorbit, schmelzextrudiert, abgekühlt, geformt und eine Hartkaramelle erhalten wird.

## Claims

1. Hard caramel, containing 1,1-GPM (1-O-α-D-glucopyranosyl-D-mannitol) in an amount of from 52 to 60 wt.% (based on the total dry substance of the hard caramel) and sorbitol in an amount of from 0.5 to 3.5 wt.%.

2. Hard caramel according to claim 1, wherein the 1,1-GPM content is from 54 to 58 wt.%.

3. Hard caramel according to claim 2, wherein the 1,1-GPM content is from 55 to 57 wt.%.

4. Hard caramel according to any one of the preceding claims, wherein the sorbitol content is from 1 to 1.5 wt.%.

5. Hard caramel according to any one of claims 1 to 3, wherein the sorbitol content is from 1.8 to 3.5 wt.%.

6. Hard caramel according to either claim 1 or claim 2, wherein the 1,1-GPM content is from 54 to 56 wt.% and the sorbitol content is from 1.8 to 3.5 wt.%.

7. Hard caramel according to claim 6, wherein the 1,1-GPM content is 55 wt.% and the sorbitol content is 3 wt.%.

8. Hard caramel according to claim 1, wherein the 1,1-GPM content is from 56 to 60 wt.% and the sorbitol content is from 0.8 to 1.8 wt.%.

9. Hard caramel according to any one of the preceding claims, wherein the hard caramel contains sweetening agents, fillers, aromatic substances, colourings, flavourings, medically active constituents, foodstuffscompatible acids, fat replacement substances, mineral salts and/or intensive sweeteners.

10. Hard caramel according to any one of the preceding claims, wherein the hard caramel contains at least one further sweetening agent, especially from 36.5 to 47.5 wt.%, selected from the group consisting of 1,6-GPS (6-O-α-D-glucopyranosyl-D-sorbitol), 1,1-GPS (1-O-α-D-glucopyranosyl-D-sorbitol), mannitol and hydrogenated or non-hydrogenated oligosaccharides.

11. Process for the production of a hard caramel according to any one of the preceding claims, wherein an aqueous solution or suspension of a mixture containing 1,1-GPM and sorbitol, especially containing from 52 to 60 wt.% of 1,1-GPM and from 0.5 to 3.5 wt.% of sorbitol, is evaporated under the action of heat, cooled and formed, and a hard caramel is obtained.

12. Process for the production of a hard caramel according to any one of claims 1 to 10, wherein a mixture containing 1,1-GPM and sorbitol, especially containing from 52 to 60 wt.% of 1,1-GPM and from 0.5 to 3.5 wt.% of sorbitol, is melt-extruded, cooled and formed, and a hard caramel is obtained.

## Revendications

1. Caramel dur contenant du 1,1-GPM (1-O-α-D-glucopyranosyl-D-mannitol) dans une quantité comprise entre 52 % et 60 % en masse (sur la base du total de la substance sèche du caramel dur) et du sorbitol dans une quantité comprise entre 0,5 et 3,5 % en masse.

2. Caramel dur selon la revendication 1, dans lequel la teneur en 1,1-GPM est comprise entre 54 et 58 % en masse.

3. Caramel dur selon la revendication 2, dans lequel la teneur en 1,1-GPM est comprise entre 55 et 57 % en masse.

4. Caramel dur selon l'une des revendications précédentes, dans lequel la teneur en sorbitol est comprise entre 1 et 1,5 % en masse.

5. Caramel dur selon l'une des revendications 1 à 3, dans lequel la teneur en sorbitol est comprise entre 1,8 et 3,5 % en masse.

6. Caramel dur selon l'une des revendications 1 et 2, dans lequel la teneur en 1,1-GPM est comprise entre 54 et 56 % en masse et la teneur en sorbitol est comprise entre 1,8 et 3,5 % en masse.

7. Caramel dur selon la revendication 6, dans lequel la teneur en 1,1-GPM est de 55 % en masse et la teneur en sorbitol de 3 % en masse.

8. Caramel dur selon la revendication 1, dans lequel la teneur en 1,1-GPM est comprise entre 56 et 60 % en masse et la teneur en sorbitol est comprise entre 0,8 et 1,8 % en masse.

9. Caramel dur selon l'une des revendications précédentes, dans lequel le caramel dur renferme des édulcorants, des matières de charge, des arômes, des colorants, des agents de sapidité, des composants efficaces sur le plan médical, des acides compatibles avec les aliments, des succédanés de matière grasse, des sels minéraux et/ou des édulcorants intenses.

10. Caramel dur selon l'une des revendications précédentes, dans lequel le caramel dur contient au moins un autre édulcorant, en particulier 36,5 à 47,5 % en masse, sélectionné parmi le groupe composé du 1,6-GPS (6-O-α-D-glucopyranosyl-D-sorbitol), du 1,1-GPS (1-O-α-D-glucopyranosyl-D-sorbitol), du mannitol et des oligosaccharides hydrogénés ou non hydrogénés.

11. Procédé de fabrication d'un caramel dur selon l'une des revendications précédentes, dans lequel une solution ou une suspension aqueuse d'un mélange contenant du 1,1-GPM et du sorbitol, en particulier contenant 52 à 60 % en masse de 1,1-GPM et 0,5 à 3,5 % en masse de sorbitol, est évaporée sous l'action de la chaleur, refroidie et modelée, et un caramel dur est obtenu.

12. Procédé de fabrication d'un caramel dur selon l'une des revendications 1 à 10, dans lequel un mélange contenant du 1,1-GPM et du sorbitol, en particulier contenant 52 à 60 % en masse de 1,1-GPM et 0,5 à 3,5 % en masse de sorbitol, est extrudé à l'état fondu, refroidi et modelé, et un caramel dur est obtenu.
